# EUROPEAN PATENT SPECIFICATION

(11) **EP 4 620 116 B1**
(45) Date of publication and mention of the grant of the patent: **28.10.2026**
(21) Application number: 22817260.7
(22) Date of filing: 14.11.2022
(51) Int. Cl.: H04B 7/04

(54) **WIRELESS DEVICE SENSING FOR IMPROVED INITIAL ACCESS**
ERFASSUNG DRAHTLOSER VORRICHTUNGEN FÜR VERBESSERTEN ERSTZUGRIFF
DÉTECTION DE DISPOSITIF SANS FIL POUR ACCÈS INITIAL AMÉLIORÉ

(43) Date of publication of application: 24.09.2025
(73) Proprietor: Telefonaktiebolaget LM Ericsson (publ), 164 83 Stockholm (SE)
(72) Inventor: SARAJLIC, Muris, 217 52 MALMÖ (SE); SJÖLAND, Henrik, 224 68 LUND (SE); SANDGREN, Magnus, 245 44 STAFFANSTORP (SE)
(74) Representative: Ericsson
(86) International application number: PCT/EP2022/081823
(87) International publication number: WO 2024/104555

(56) References cited:
- WO-A1-2022/133957
- WO-A1-2022/186903
- WO-A1-2023/044265

## Description

### TECHNICAL FIELD

The present disclosure relates to wireless communications, and in particular, to wireless device (WD) sensing for improved initial access.

### BACKGROUND

The Third Generation Partnership Project (3GPP) has developed and is developing standards for Fourth Generation (4G) (also referred to as Long Term Evolution (LTE)) and Fifth Generation (5G) (also referred to as New Radio (NR)) wireless communication systems. Such systems provide, among other features, broadband communication between network nodes, such as base stations, and mobile wireless devices (WD), as well as communication between network nodes and between WDs. Sixth Generation (6G) wireless communication systems are also under development.

In addition to these standards, the Institute of Electrical and Electronic Engineers (IEEE) has developed and continues to develop standards for other types of wireless communication networks, including Wireless Local Area Networks (WLANs), including Wireless Fidelity (Wi-Fi) networks. WLANS include wireless communication between access points (APs) and WDs.

Radio communication in mmWave frequency bands (30 - 300 GHz) enables the use of extensive - and previously underexploited - frequency resources (on the order of GHz for contiguous spectrum allocations, and on the order of tens of GHz for non-contiguous allocations). Wide bandwidths available in mmWave translate to greatly increased per-user and system throughputs compared with legacy radio communication systems operating at lower frequencies. This serves as a motivation for adopting the use of mmWave bands in upcoming radio standards, and this adoption has already started, with 5G NR (3GPP Technical Releases 15-16) prescribing the use of bands up to 52.6 GHz and 3GPP Technical Release 17 expanding to cover also the frequency range 52.6 - 71 GHz. Adoption of mmWave bands is also employed in the IEEE 802.11 family of standards. Expanding the operation beyond 70 GHz (and especially beyond 100 GHz) is a subject of ongoing research.

A backscatter radio may be used for identification of objects by providing mechanisms to active modifying a signal before retransmitting it back to the inquiring device.

WO 2022/133957 A1 discloses an approach using a so called controlled metasurface device, typically a reflective intelligent surface (RIS), which is capable of redirecting a wavefront transmitted by a transmitter to a receiver in a wireless network. The approach comprises conveying first and second configuration information from a base station to a user equipment (UE).

WO 2022/186903 A1 discloses a method including a UE transmitting a firs on-demand request for first positioning reference signal (PRS) resources of a first signal type based on reception by the UE of a first downlink reference signal (DL-RS) of the first signal type with at least a first threshold quality and lack of reception of a second DL-RS of a second signal type with at least a second threshold quality. One of the first and second signal types is for non-RIS-reflected sighal transfer and the other signal type is for RIS-reflected signal transfer. Alternatively, the UE transmits a second on-demand request for second PRS resources for RIS-reflected signal transfer. The second on-demand request specifies a first RIS of a plurality of RISes associated with a common base station. Further alternatively, the UE transmits a capability message indicating that the UE supports different PRS symbol durations for RIS-reflected PRS and non-RIS-reflected PRS.

Operating at mmWave frequencies (order of GHz or tens of GHz) and large bandwidths comes with a host of technical challenges. For example:
1. Antenna area (in an electromagnetic sense) shrinks with increasing operating frequency. This reduces the amount of power being radiated or received by a single high-frequency antenna compared to its low-frequency counterparts;
2. Physical size of the power amplifiers (PAs) decreases with increasing operating frequency, and with it the maximum power they may deliver; and
3. Operating at large bandwidths incurs increased power consumption of analog circuitry, especially analog-to-digital converters.

A direct consequence of challenges 1 and 2 is a significant decrease of received (Rx) power compared to operating at lower frequencies. A typical way to compensate for RX power loss is to employ an array of antennas in both receive and transmit (Tx) mode, where in the Tx mode each antenna is driven by an individual PA. Using an array of antennas enables transmitting the power in a certain direction (likewise, focusing the reception to a certain direction), effectively resulting in a gain that compensates for lost power. In the receive mode, the antenna gain may in a similar way be increased and directed. Power may be directed to or received from a certain direction by e.g., individually shifting the signal phases at each antenna element, causing the copies of the signal (to and/or from a desired direction) at each antenna element to add constructively. This directivity creates a beam, and Tx and Rx beams may be distinguished.

A typical way of dealing with challenge of large bandwidths is to employ a small number of digital transceiver (Tx-Rx) chains, sometimes only one or two, to reduce the number of analog-to-digital converters and keep the power consumption low. In this configuration, signal weighting as described above (beamforming) needs to be performed mostly in an analog domain (analog beamforming).

Some solutions cause further practical problems. For example, for beamforming performed in the analog domain, it is convenient from an implementation perspective to only provide a single signal phase shift for each antenna element. A set of per-antenna phase shifts may determine one particular beam direction. This means that only one direction at a time may be illuminated by a beam. Also, the large antenna array gain needed at mmWave frequencies comes at the price of very narrow beams due to a fundamental tradeoff between array gain and beamwidth; a large number of beams is therefore needed to cover a typical angular range, e.g., 120 degrees in the horizontal plane by 90 degrees in the vertical plane.

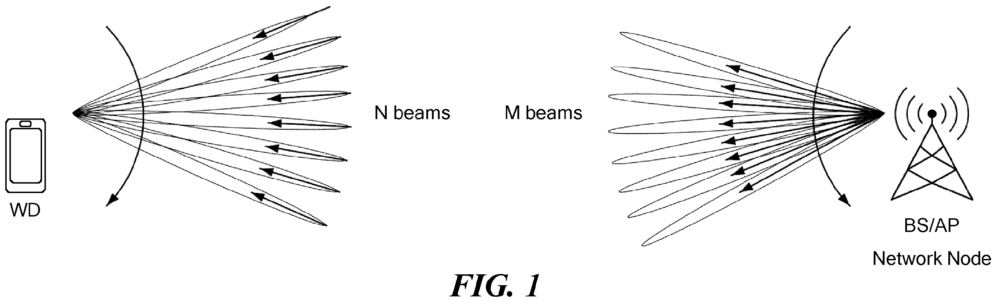

For the best link budget, beamforming should be performed for both transmission and reception. In a system with *M* transmit beams and *N* receive beams (illustrated in FIG. 1 in a downlink (DL) setup), and with the use of analog beamforming, finding the optimal beam pair typically includes sending reference signals (RSs) separately in each transmit beam and receiving in each receive beam, where all receive beams are tested for one transmit beam (in order to exhaust all transmit - receive beam combinations). For example, with *N* = *M* = 2, the transmitter may transmit the RS in transmit beam 1 and the receiver may receive this transmission first with receive beam 1 and then with receive beam 2. In the second step, the transmitter may transmit with transmit beam 2 and the receiver may receive the transmission first with receive beam 1, and then with receive beam 2. In this way, all 4 transmit - receive beam combinations are tested. Following the receptions, the receiver measures the quality of the received signal in each reception. Measured quality is used internally in the receiver for determining the best receive beam; if the target is to determine the best transmit beam, measured quality is reported to the transmitter.

When joining a new cell or switching from idle to connected mode of operation, the WD needs to perform time and frequency synchronization with the network and exchange control information needed for establishing a network connection. This procedure is referred to as the initial access (IA) procedure. For a DL-based IA in mmWave, this typically includes the base station/access point (network node/AP) transmitting synchronization reference signals (together with some basic configuration information, referred to as a synchronization block, SB) in a set of transmit beams sequentially, one beam at a time. A set of such beamformed synchronization block transmissions may be repeated periodically with a predefined time period. In frequency, the synchronization block may be located on one of *F* possible frequencies on a synchronization frequency raster, with rasters and *F* changing from one frequency band to another. A WD intending to connect to a cell in a particular frequency band may start checking for the presence of a synchronization block using a set of receive beams on each of the *F* frequencies of the synchronization raster.

The duration of the initial access procedure in mmWave may be prohibitively long. Assuming the transmission period of the set of synchronization blocks is *T* seconds, total time needed to find the correct synchronization frequency, optimal receive beam and the synchronization block corresponding to the best transmit beam is *NFT* seconds in the worst case. In NR, the default synchronization block periodicity is *T* = 20 *ms* which may translate to worst case initial access time on the order of seconds or tens of seconds (depending on number of receive beams *N*, typically on the order of 10 and the number of frequency points *F*, typically on the order of 10 or 100). This may be unsatisfactory in some applications, e.g., if a fast switch from idle to connected mode of operation is desired.

### SUMMARY

Some embodiments advantageously provide methods, WDs and active reflectors for wireless device (WD) sensing for improved initial access.

Some embodiments include a pre-initial access method performed by the WD, wherein the WD performs beamformed monostatic sensing of the environment in order to find the transmit and receive beam direction towards the network node/AP. The network node/AP is collocated with an active reflector that a) modulates the incoming sensing signal from the WD with an information sequence known to the WD and b) reflects the modulated signal.

Information about the frequency location of the initial-access synchronization block (possibly together with other system parameters) is encoded in the information sequence that may be used by the active reflector to modulate the incoming sensing signal from the WD. The information sequence may be a modified version of the Zadoff-Chu sequence, but other sequences may be used.

Some embodiments provide a significant speedup of the initial access procedure by enabling the WD to simultaneously find a) the best beam direction towards the network node/AP and b) the frequency location of the synchronization block.

More specifically, some embodiments may enable a WD to:
- during the course of the sensing, differentiate the reflection of the sounding signal from network node direction from environment reflections. As a direct consequence, the best receive and transmit beam towards the network node may be determined directly without further beam refinement;
- determine the frequency location of the synchronization block (no need to sweep the synchronization raster);

- possibly determine other information relevant for the initial access procedure, such as e.g., network node ID; and/or
- find a range estimate towards the network node (useful for positioning of the WD if the position of the network node is known beforehand) and pathloss estimate (if the radar cross section (RCS) of the reflector is known). The range estimate may be beneficial since uplink timing at the network node may be more accurate during initial access if the WD compensates for uplink propagation delay. This may obviate the need for an initial timing advance (TA) procedure, thereby speeding up the initial access.

Moreover, use of Zadoff-Chu sequences for modulation of the inquiring signal enables signal to noise ratio (SNR) gains through postprocessing that improve the link budget and extend the range of mmWave operation. Additionally, by the active reflector being always on, the robustness of the identification is improved, together with simplifying the implementation of the active reflector.

Some embodiments reduce the initial access time by a factor of at least 100 compared to legacy methods, while offering a link range on the order of 100 meters, as exemplified in numerical examples disclosed herein.

According to one aspect, a method in a wireless device, WD, configured to communicate with a network node, the network node having an active reflector in proximity thereto is provided. The method includes transmitting a sensing signal on a transmit beam and receiving a received signal on a receive beam. The method also includes determining whether the received signal includes a reflected signal from an active reflector at the network node based at least in part on knowledge of properties of the reflected signal, the reflected signal including information modulated onto the sensing signal. The method also includes, when the received signal includes the reflected signal, determining a frequency location of an initial access synchronization block, SB, based at least in part on information modulated onto the sensing signal by the active reflector.

According to this aspect, in some embodiments, determining whether the received signal includes the reflected signal includes detecting a sequence of L symbols in a periodic repetition of the L symbols, the L symbols being selected from a predefined set of symbol sequences known to the WD. In some examples thereof, the periodic repetition of the sequence of L symbols is a periodic repetition of a Zadoff-Chu, ZC, sequence with root *r* and length *L*. In some examples, the root *r* maps to a frequency location of the initial access SB. In some examples, the ZC sequence maps to system information, the system information including at least one of a network node ID and an indication whether the WD is permitted to access a cell of the network node. In some embodiments, the sequence of L symbols maps to the frequency location of the initial access SB according to a mapping previously known by the WD. In some embodiments, the sensing signal is transmitted on frequency resources reserved for transmission of sensing signals. In some embodiments, determining the frequency location of the initial access SB includes determining a modulation of the reflected signal. In some examples, determining whether the received signal includes the reflected signal includes correlating the received signal with at least one known sequence of a set of sequences. In some examples, the method includes determining a propagation delay based at least in part on a result of the correlating. In some examples, correlating the received signal with at least one known signature function includes determining a peak-to-average power ratio, PAPR, of the correlation for each of the at least one known signature function and comparing the PAPR to a threshold.

According to another aspect, a WD is configured to communicate with a network node, the network node having an active reflector in proximity thereto. The WD includes a radio interface configured to transmit a sensing signal on a transmit beam and receive a received signal on a receive beam. The WD includes processing circuitry in communication with the radio interface, the processing circuitry configured to: determine whether the received signal includes a reflected signal from an active reflector at the network node based at least in part on knowledge of properties of the reflected signal, the reflected signal including information modulated onto the sensing signal. The process includes when the received signal includes the reflected signal, determine a frequency location of an initial access synchronization block, SB, based at least in part on information modulated onto the sensing signal by the active reflector. In some embodiments, determining whether the received signal includes the reflected signal includes detecting a sequence of L symbols in a periodic repetition of the L symbols, the L symbols being selected from a predefined set of symbol sequences known to the WD. In some examples thereof, the periodic repetition of the sequence of L symbols is a periodic repetition of a Zadoff-Chu, ZC, sequence with root r and length *L*. In some examples, the root r maps to a frequency location of the initial access SB. In some examples, the ZC sequence maps to system information, the system information including at least one of a network node ID and an indication whether the WD is permitted to access a cell of the network node. In some embodiments, the sequence of L symbols maps to the frequency location of the initial access SB according to a mapping previously known by the WD. In some embodiments, the sensing signal is transmitted on frequency resources reserved for transmission of sensing signals. In some embodiments, determining the frequency location of the initial access SB includes determining a modulation of the reflected signal. In some examples, determining whether the received signal includes the reflected signal includes correlating the received signal with at least one known sequence of a set of sequences. In some examples, the processing circuitry is further configured to determine a propagation delay based at least in part on a result of the correlating. In some examples, correlating the received signal with at least one known signature function includes determining a peak-to-average power ratio, PABR, of the correlation for each of the at least one known signature function and comparing the PABR to a threshold.

According to yet another aspect, an active reflector configured to modulate and reflect an incident signal transmitted from a wireless device, WD is provided. The active reflector includes an array of antennas configured to receive the incident signal. The active reflector also includes processing circuitry in communication with the antennas and configured to modulate the incident signal with information, the information including an indication of a frequency location of an initial access synchronization block, SB. The array of antennas is configured to reflect the modulated incident signal to produce a reflected signal.

According to another aspect, in some embodiments, modulating the incident signal includes encoding a periodic repetition of a sequence of L symbols, the L symbols being selected from a predefined set of symbol sequences known to the WD. In some examples thereof, the periodic repetition of the sequence of L symbols is a periodic repetition of a Zadoff-Chu, ZC, sequence with root *r* and length *L*. In some examples, the root *r* indicates the frequency location of the initial access SB according to a mapping previously known by the WD. In some examples, the ZC sequence maps to system information, the system information including at least one of a network node ID and an indication whether the WD is permitted to access a cell of the network node. In some embodiments, modulating the incident signal includes modulating at least one of a phase of the incident signal. In some embodiments, the processing circuitry is configured to condition the modulating upon whether the incident signal has a power that exceeds a threshold. In some embodiments, modulating the incident signal includes encoding initial access parameters and modulating the incident signal according to the encoded initial access parameters.

According to yet another aspect, a method for active-reflector-assisted initial access synchronization by a wireless device, WD, is provided. The method includes receiving by an array of antennas of the active reflector, an incident signal. The method also includes modulating the incident signal with information, the information including an indication of a frequency location of an initial access synchronization block, SB. The method also includes reflecting by the array of antennas, the modulated incident signal to produce a reflected signal.

According to this aspect, the method includes modulating the incident signal by encoding a periodic repetition of a sequence of L symbols, the L symbols being selected from a predefined set of symbol sequences known to the WD. In some examples thereof, the periodic repetition of the sequence of L symbols is a periodic repetition of a Zadoff-Chu, ZC, sequence with root *r* and length *L*. In some examples, the root *r* indicates the frequency location of the initial access SB according to a mapping previously known by the WD. In some examples, the ZC sequence maps to system information, the system information including at least one of a network node ID and an indication whether the WD is permitted to access a cell of the network node. In some embodiments, modulating the incident signal includes modulating at least one of a phase and amplitude of the modulation. In some embodiments, the method includes conditioning the modulating upon whether the incident signal has a power that exceeds a threshold. In some embodiments, modulating the incident signal includes encoding initial access parameters and modulating the incident signal according to the encoded initial access parameters.

### BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:
FIG. 1 is an illustration of transmit and receive beams between a WD and a network node;
FIG. 2 is a schematic diagram of an example network architecture illustrating a communication system with an active reflector according to the principles in the present disclosure;
FIG. 3 is a block diagram of a network node a wireless device and an active reflector according to some embodiments of the present disclosure;
FIG. 4 is a flowchart of an example process in a wireless device for sensing for improved initial access;
FIG. 5 is a flowchart of an example process in an active reflector for wireless device (WD) sensing for improved initial access;
FIG. 6 is an illustration of principles of operation of a network node and a WD for sensing for improved initial access according to principles disclosed herein;
FIG. 7 is a graph of waveforms for sensing at the WD for improved initial access;
FIG. 8 illustrates a portion of an infinitely repeating core signal for modulating an incident signal by the active reflector;
FIG. 9 illustrates two correlation results, the top diagram illustrating no correlation and the bottom diagram indicating a correlation peak;
FIG. 10 illustrates miss probabilities versus signal to noise ratio; and
FIG. 11 illustrates false alarm probabilities versus signal to noise ratio.

### DETAILED DESCRIPTION

Before describing in detail example embodiments, it is noted that the embodiments reside primarily in combinations of apparatus components and processing steps related to wireless device (WD) sensing for improved initial access. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein. Like numbers refer to like elements throughout the description.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "includes," "including," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled," "connected," and the like, may be used herein to indicate a connection, although not necessarily directly, and may include wired and/or wireless connections.

The term "network node" used herein may be any kind of network node included in a radio network which may further include any of base station (network node), radio base station, base transceiver station (BTS), base station controller (network node), radio network controller (RNC), g Node B (gNB), evolved Node B (eNB or eNodeB), Node B, multi-standard radio (MSR) radio node such as MSR network node, multi-cell/multicast coordination entity (MCE), integrated access and backhaul (IAB) node, relay node, donor node controlling relay, radio access point (AP), transmission points, transmission nodes, Remote Radio Unit (RRU) Remote Radio Head (RRH), a core network node (e.g., mobile management entity (MME), self-organizing network (SON) node, a coordinating node, positioning node, MDT node, etc.), an external node (e.g., 3rd party node, a node external to the current network), nodes in distributed antenna system (DAS), a spectrum access system (SAS) node, an element management system (EMS), etc. The network node may also include test equipment. The term "radio node" used herein may be used to also denote a wireless device (WD) such as a wireless device (WD) or a radio network node.

In some embodiments, the non-limiting terms wireless device (WD) or a user equipment (UE) are used interchangeably. The WD herein may be any type of wireless device capable of communicating with a network node or another WD over radio signals, such as wireless device (WD). The WD may also be a radio communication device, target device, device to device (D2D) WD, machine type WD or WD capable of machine to machine communication (M2M), low-cost and/or low-complexity WD, a sensor equipped with WD, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device, etc.

Also, in some embodiments the generic term "radio network node" is used. It may be any kind of a radio network node which may include any of base station, radio base station, base transceiver station, base station controller, network controller, RNC, evolved Node B (eNB), Node B, gNB, Multi-cell/multicast Coordination Entity (MCE), IAB node, relay node, access point, radio access point, Remote Radio Unit (RRU) Remote Radio Head (RRH).

Note that although terminology from one particular wireless system, such as, for example, 3GPP LTE and/or New Radio (NR), may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

Note further, that functions described herein as being performed by a wireless device or a network node may be distributed over a plurality of wireless devices and/or network nodes. In other words, it is contemplated that the functions of the network node and wireless device described herein are not limited to performance by a single physical device and, in fact, may be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

Some embodiments provide wireless device (WD) sensing for improved initial access.

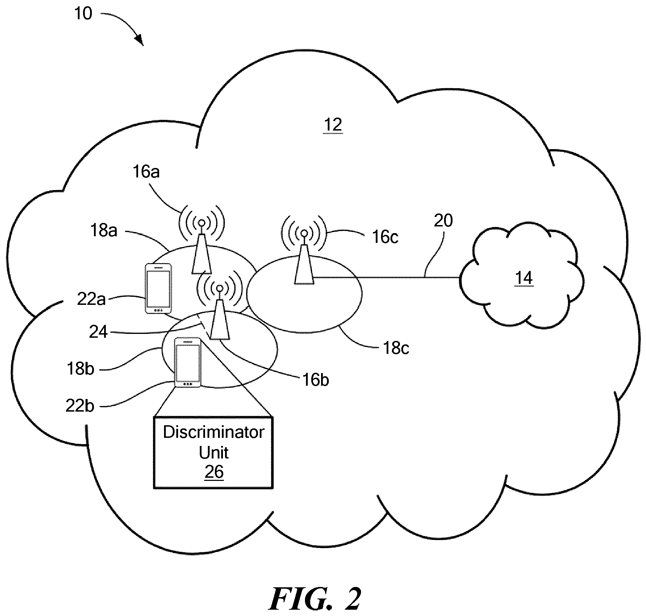

Referring again to the drawing figures, in which like elements are referred to by like reference numerals, there is shown in FIG. 2 a schematic diagram of a communication system 10, according to an embodiment, such as a 3GPP-type cellular network that may support standards such as LTE and/or NR (5G), which comprises an access network 12, such as a radio access network, and a core network 14. The access network 12 comprises a plurality of network nodes 16a, 16b, 16c (referred to collectively as network nodes 16), such as NBs, eNBs, gNBs or other types of wireless access points, each defining a corresponding coverage area 18a, 18b, 18c (referred to collectively as coverage areas 18). Each network node 16a, 16b, 16c is connectable to the core network 14 over a wired or wireless connection 20. A first wireless device (WD) 22a located in coverage area 18a is configured to wirelessly connect to, or be paged by, the corresponding network node 16a. A second WD 22b in coverage area 18b is wirelessly connectable to the corresponding network node 16b. While a plurality of WDs 22a, 22b (collectively referred to as wireless devices 22) are illustrated in this example, the disclosed embodiments are equally applicable to a situation where a sole WD is in the coverage area or where a sole WD is connecting to the corresponding network node 16. Note that although only two WDs 22 and three network nodes 16 are shown for convenience, the communication system may include many more WDs 22 and network nodes 16.

Also, it is contemplated that a WD 22 may be in simultaneous communication and/or configured to separately communicate with more than one network node 16 and more than one type of network node 16. For example, a WD 22 may have dual connectivity with a network node 16 that supports LTE and the same or a different network node 16 that supports NR. As an example, WD 22 may be in communication with an eNB for LTE/E-UTRAN and a gNB for NR/NG-RAN.

An active reflector 24 is located at the network node 16. A wireless device 22 is configured to include a discriminator unit 26 which is configured to determine whether a received signal includes a reflected signal from the active reflector 24 at a network node 16 based at least in part on knowledge of properties of the reflected signal.

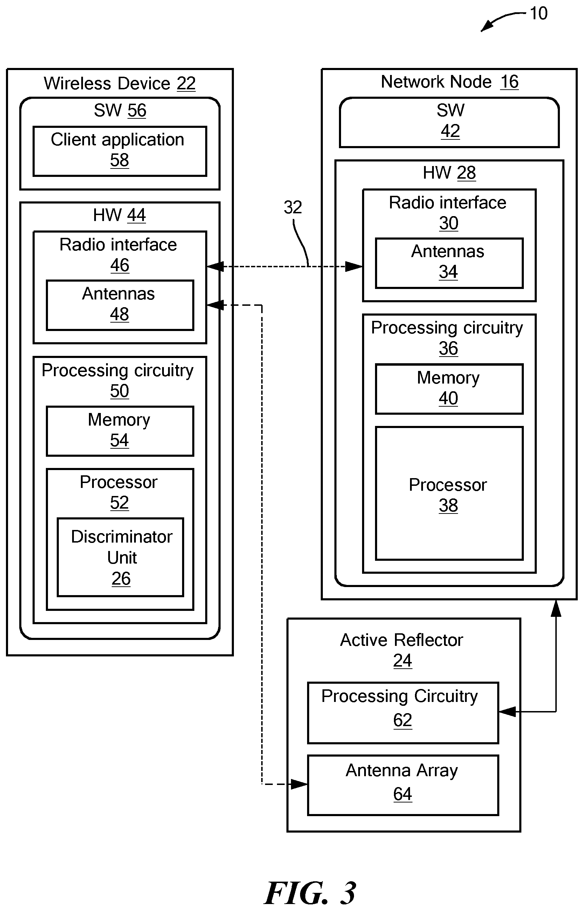

Example implementations, in accordance with an embodiment, of the WD 22 and network node 16 discussed in the preceding paragraphs will now be described with reference to FIG. 3.

The communication system 10 includes a network node 16 provided in a communication system 10 and including hardware 28 enabling it to communicate with the WD 22. The hardware 28 may include a radio interface 30 for setting up and maintaining at least a wireless connection 32 with a WD 22 located in a coverage area 18 served by the network node 16. The radio interface 30 may be formed as or may include, for example, one or more RF transmitters, one or more RF receivers, and/or one or more RF transceivers. The radio interface 30 includes an array of antennas 34 to radiate and receive signal-carrying electromagnetic waves.

In the embodiment shown, the hardware 28 of the network node 16 further includes processing circuitry 36. The processing circuitry 36 may include a processor 38 and a memory 40. In particular, in addition to or instead of a processor, such as a central processing unit, and memory, the processing circuitry 36 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 38 may be configured to access (e.g., write to and/or read from) the memory 40, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the network node 16 further has software 42 stored internally in, for example, memory 40, or stored in external memory (e.g., database, storage array, network storage device, etc.) accessible by the network node 16 via an external connection. The software 42 may be executable by the processing circuitry 36. The processing circuitry 36 may be configured to control any of the methods and/or processes described herein and/or to cause such methods, and/or processes to be performed, e.g., by network node 16. Processor 38 corresponds to one or more processors 38 for performing network node 16 functions described herein. The memory 40 is configured to store data, programmatic software code and/or other information described herein. In some embodiments, the software 42 may include instructions that, when executed by the processor 38 and/or processing circuitry 36, causes the processor 38 and/or processing circuitry 36 to perform the processes described herein with respect to network node 16.

The communication system 10 further includes the WD 22 already referred to. The WD 22 may have hardware 44 that may include a radio interface 46 configured to set up and maintain a wireless connection 32 with a network node 16 serving a coverage area 18 in which the WD 22 is currently located. The radio interface 46 may be formed as or may include, for example, one or more RF transmitters, one or more RF receivers, and/or one or more RF transceivers. The radio interface 46 includes an array of antennas 48 to radiate and receive signal-carrying electromagnetic waves.

The hardware 44 of the WD 22 further includes processing circuitry 50. The processing circuitry 50 may include a processor 52 and memory 54. In particular, in addition to or instead of a processor, such as a central processing unit, and memory, the processing circuitry 50 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 52 may be configured to access (e.g., write to and/or read from) memory 54, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the WD 22 may further comprise software 56, which is stored in, for example, memory 54 at the WD 22, or stored in external memory (e.g., database, storage array, network storage device, etc.) accessible by the WD 22. The software 56 may be executable by the processing circuitry 50. The software 56 may include a client application 58. The client application 58 may be operable to provide a service to a human or non-human user via the WD 22.

The processing circuitry 50 may be configured to control any of the methods and/or processes described herein and/or to cause such methods, and/or processes to be performed, e.g., by WD 22. The processor 52 corresponds to one or more processors 52 for performing WD 22 functions described herein. The WD 22 includes memory 54 that is configured to store data, programmatic software code and/or other information described herein. In some embodiments, the software 56 and/or the client application 58 may include instructions that, when executed by the processor 52 and/or processing circuitry 50, causes the processor 52 and/or processing circuitry 50 to perform the processes described herein with respect to WD 22. For example, the processing circuitry 50 of the wireless device 22 may include a discriminator unit 26 which is configured to determine whether a received signal includes a reflected signal from an active reflector at a network node based at least in part on knowledge of properties of the reflected signal.

In some embodiments, the inner workings of the network node 16 and WD 22 may be as shown in FIG. 3 and independently, the surrounding network topology may be that of FIG. 2.

The wireless connection 32 between the WD 22 and the network node 16 is in accordance with the teachings of the embodiments described throughout this disclosure. More precisely, the teachings of some of these embodiments may improve the data rate, latency, and/or power consumption and thereby provide benefits such as reduced user waiting time, relaxed restriction on file size, better responsiveness, extended battery lifetime, etc. In some embodiments, a measurement procedure may be provided for the purpose of monitoring data rate, latency and other factors on which the one or more embodiments improve.

FIG. 3 also shows an active reflector 24 configured to receive a sensing signal from the WD 22, modulate it, and reflect it back toward the WD 22. The active reflector 24 includes processing circuitry 62 in communication with an array of antennas 64. The array of antennas 64 is configured to receive and reflect an incident electromagnetic wave from the WD 22. The processing circuitry 62 is configured to modulate the received incident signal with information that indicates a frequency location of an initial access synchronization block (SB), which decrease an amount of time it takes for the WD 22 to synchronize with the network node 16. The modulation may be performed by varying the impedances associated with each antenna element of the array of antennas 64. The processing circuitry 62 may be in wired or wireless communication with the network node 16 so that, for example, the network node 16 may configure the active reflector 24 to implement one or more modulations of the received incident signal. Thus, the processing circuitry 36 of the network node 15 may be configured to configure the processing circuitry 62 of the active reflector to cause a particular modulation or configuration of the antenna array 64 of the active reflector 24. Note also that the array of antennas 64 is shown as a planar array of uniformly spaced antennas on each panel. In some embodiments, the array of antennas 64 on each panel is not planar. In some embodiments, the antennas of the array of antennas 64 are not uniformly spaced.

Although FIGS. 2 and 3 show various "units" such as discriminator unit 26 as being within a respective processor, it is contemplated that these units may be implemented such that a portion of the unit is stored in a corresponding memory within the processing circuitry. In other words, the units may be implemented in hardware or in a combination of hardware and software within the processing circuitry.

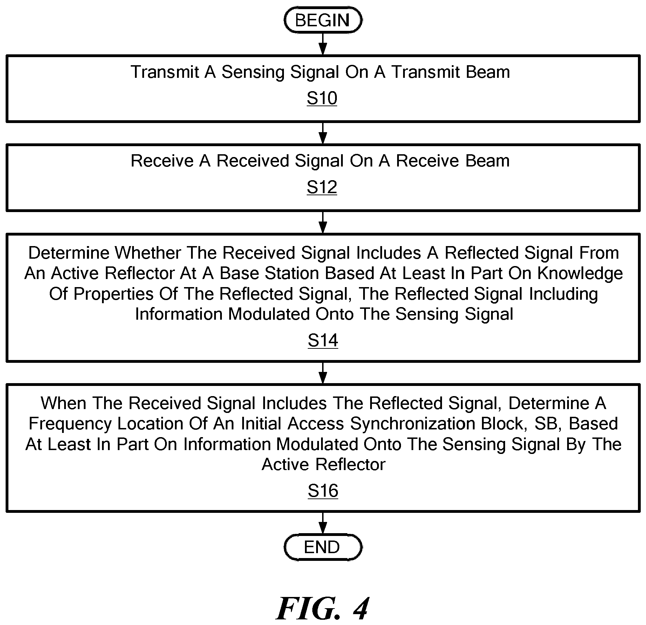

FIG. 4 is a flowchart of an example process in a wireless device 22 according to some embodiments of the present disclosure. One or more blocks described herein may be performed by one or more elements of wireless device 22 such as by one or more of processing circuitry 50 (including the discriminator unit 26), processor 52, and/or radio interface 46. Wireless device 22 such as via processing circuitry 50 and/or processor 52 and/or radio interface 46 is configured to transmit a sensing signal on a transmit beam (Block S10) and receive a received signal on a receive beam (Block S12). The process also includes determining whether the received signal includes a reflected signal from an active reflector 24 at the network node 16 based at least in part on knowledge of properties of the reflected signal, the reflected signal including information modulated onto the sensing signal (Block S14). The process also includes, when the received signal includes the reflected signal, determining a frequency location of an initial access synchronization block, SB, based at least in part on information modulated onto the sensing signal by the active reflector 24 (Block S16).

In some embodiments, determining whether the received signal includes the reflected signal includes detecting a sequence of L symbols in a periodic repetition of the L symbols, the L symbols being selected from a predefined set of symbol sequences known to the WD 22. In some embodiments, the periodic repetition of the sequence of L symbols is a periodic repetition of a Zadoff-Chu, ZC, sequence with root *r* and length *L*. In some embodiments, the root *r* maps to a frequency location of the initial access SB. In some embodiment, the ZC sequence maps to system information, the system information including at least one of a network node ID and an indication whether the WD 22 is permitted to access a cell of the network node 16. In some embodiments, the sequence of L symbols maps to the frequency location of the initial access SB according to a mapping previously known by the WD 22. In some embodiments, the sensing signal is transmitted on frequency resources reserved for transmission of sensing signals. In some embodiments, determining the frequency location of the initial access SB includes determining a modulation of the reflected signal. In some embodiments, determining whether the received signal includes the reflected signal includes correlating the received signal with at least one known sequence of a set of sequences. In some embodiments, the method also includes determining a propagation delay based at least in part on a result of the correlating. In some embodiments, correlating the received signal with at least one known signature function includes determining a peak-to-average power ratio, PAPR, of the correlation for each of the at least one known signature function and comparing the PAPR to a threshold.

According to some embodiments, to support range measurements between the sensing WD 22 and the active reflector 24, the WD 22 can modulate its sensing transmission. The range accuracy will depend on modulation bandwidth and signal strength of the returning signal. The returning signal is correlated with delayed copies of the modulation signal applied in the WD 22. The distance is detected by determining what delay provides strongest correlation. At the same time as correlating for the modulation applied by the WD 22, the correlation must also impose the modulation of the active reflector 24, so both modulations must be applied at the same time to detect the presence of the active reflector 24 and its distance. The search space is thus increased, which could be handled by first searching for the active reflector 24 using an unmodulated carrier to find the proper setting of the reflector sequence correlation. Then modulation is applied on the sensing signal, while correlating for the active reflector 24 with its determined sequence and correlating for different range hypotheses.

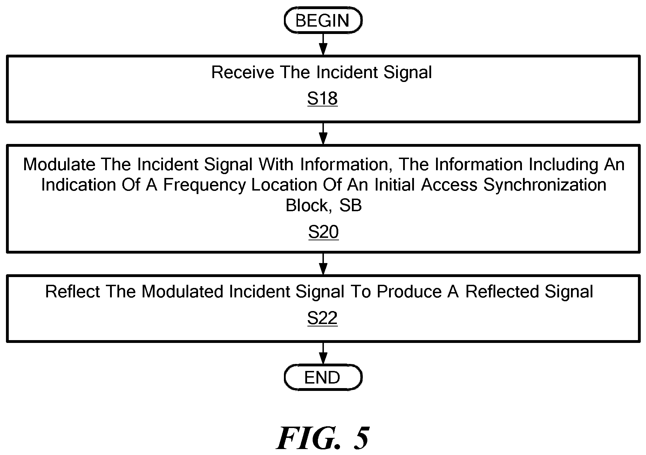

FIG. 5 is a flowchart of an example process in an active reflector 24 for improved sensing for fast initial access. One or more blocks described herein may be performed by one or more elements of the active reflector 24 such as by one or more of the processing circuitry 62 and the antenna array 64, which are configured to receive by an array of antennas 64 of the active reflector 24, an incident signal (Block S18). The process also includes modulating the incident signal with information, the information including an indication of a frequency location of an initial access synchronization block, SB (Block S20). The process also includes reflecting by the array of antennas 64, the modulated incident signal to produce a reflected signal (Block S22).

In some embodiments, modulating the incident signal includes encoding a periodic repetition of a sequence of L symbols, the L symbols being selected from a predefined set of symbol sequences known to the WD 22. In some embodiments, the periodic repetition of the sequence of L symbols is a periodic repetition of a Zadoff-Chu, ZC, sequence with root *r* and length *L*. In some embodiments, the root *r* indicates the frequency location of the initial access SB according to a mapping previously known by the WD 22. In some embodiments, the ZC sequence maps to system information, the system information including at least one of a network node ID and an indication whether the WD 22 is permitted to access a cell of the network node 16. In some embodiments, modulating the incident signal includes modulating at least one of a phase and amplitude of the incident signal. In some embodiments, the method also includes conditioning the modulating upon whether the incident signal has a power that exceeds a threshold. In some embodiments, modulating the incident signal includes encoding initial access parameters and modulating the incident signal according to the encoded initial access parameters.

Having described the general process flow of arrangements of the disclosure and having provided examples of hardware and software arrangements for implementing the processes and functions of the disclosure, the sections below provide details and examples of arrangements for wireless device (WD) sensing for improved initial access.

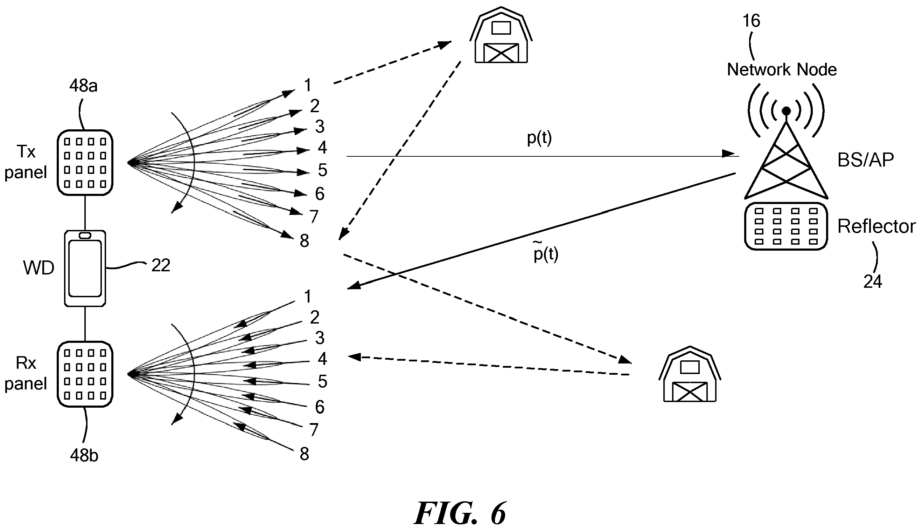

According to one aspect, a pre-initial access method at a WD 22 is provided. In some embodiments, the WD 22 determines a transmit/receive direction by sending a sensing signal (possibly using a transmit beam) and receiving a reflected signal using a receive beam. The WD 22 may also determine a location in frequency of an initial access synchronization block (SB). This information may be encoded by an active reflector 24 which may be collocated with the network node 16. Other system parameters relevant to initial access may also be encoded by the active reflector 24. The active reflector 24 is configured to modify the uplink (UL) sensing signal from the WD 22. The active reflector 24 reflects the modified UL sensing signal in the DL back towards the WD 22. The operational principle of some embodiments is shown in FIG. 6. The components in FIG. 6 are not to scale and each beam of the beams shown in FIG. 6 may have a different shape.

The WD 22, using a transmit antenna panel 48a of antennas 48 and processing circuitry 50, performs beamformed transmissions of a sensing signal p(t). The same WD 22, including a receive antenna panel 48b of antennas 48, radio interface 46 and processing circuitry 50, simultaneously performs beamformed receptions of the reflected and possibly modified signal p(t), the modified signal denoted by p̃(t). In some embodiments, the transmitter of the radio interface 46 repeats the transmission of p(t) in the same transmit beam R times and for each of these transmissions, the receiver of the radio interface 46 sweeps the receive beam. For each transmit - receive beam pair and using both p(t) and p̃(t), the WD 22 may perform postprocessing of the received modified signal p̃(t).

Thus, in some embodiments, the network node 16 site is equipped with an active reflector 24 that a) takes the incoming sensing signal p(t) and modifies it to p̃(t), with the modification known to the WD 22 and b) retransmits p̃(t) in the DL. The WD 22 may receive p̃(t) in receive beam 2 (additionally distorted by the propagation channel and with added thermal noise) while transmitting by transmit beam 4. If the WD 22 knows how the network node 16 modifies the sensing signal, by postprocessing p̃(t), the WD 22 will be able to recognize the reflection as coming from the direction of the network node 16 and distinguish it from the reflections generated by physical objects in the propagation environment, such as those in (transmit beam 1, receive beam 1) and (transmit beam 8, receive beam 5). For subsequent communication with the network node 16, as e.g., in receiving the synchronization block, the WD 22 may then use receive beam 2. Note once again that the geometries shown in FIG. 6 are exaggerated and not to scale. Further, the directions 1-8 may generally indicate different directions of the principal beam of the beams, but the beams may generally be of different shape and have some overlap. Also, beams shown being scattered by the physical objects are not beams, but may typically have a highly irregular scattering pattern.

Furthermore, if the frequency location of the synchronization block and possibly other information useful for initial access is encoded in p̃(t), by postprocessing the WD 22 may also infer this information. As a very simple example, assume that there are two possible frequency locations of the synchronization block and two possible modifications of p(t) by the active reflector 24, resulting in two possible variants of p̃(t) which may be denoted as p̃₁(t) and p̃₂(t). There may be a one-to-one mapping between synchronization block frequency location and the modification of the sensing signal; namely, if the network uses frequency location 1 for the synchronization block, p(t) is modified to result in p̃₁(t). Likewise, use of frequency location 2 leads to p(t) being modified to result in p̃₂(t). If the WD 22 knows the network node 16 will modify the sensing signal in one of these two ways and detects that modification 2 took place, it may infer that the network is using frequency location 2 to transmit the synchronization block.

### Example calculation of scanning time

Assuming that the WD 22 has 32 transmit beams and 32 receive beams and that the time taken for one transmission of p(t) is Tₛₑₙₛ = 40 µs, the beamformed sensing procedure together with decoding of system parameters (initial access frequency location + possibly other relevant parameters) will take 32*32*40 µs = 41 ms if all beams are tested. However, for each transmit beam, the number of tested receive beams may be small and selected from directions around the transmit beam direction, so that the process of finding a best receive beam takes less time than if all receive beams are tested.

In some embodiments, the active reflector 24 modulates the incoming WD sensing signal by changing its phase and/or amplitude using a signature signal known to the WD 22. Also, the mapping of signature signal to frequency location of the synchronization block and other system parameters encoded by the modulation is known to the WD 22 (possibly as part of the standard). The WD 22 performs postprocessing of the received signal using its copy of the signature signal and thus identifies the reflection as coming from the direction of the network node 16. The WD 22 extracts the frequency location of the initial access synchronization block and possibly other initial-access relevant parameters.

Assume that the sensing signal p(t) in one transmission is a time-limited continuous wave signal with starting time t₀ and duration Tₛₑₙₛ, with amplitude 1 for simplicity. In the passband, the described signal may be modeled as: $p \left(t\right) = \left\{\begin{matrix}Re \left\{{e}^{i 2 {πf}_{c} t}\right\} , & {t}_{0} \leq t \leq {t}_{0} + {T}_{sens} , \\ 0 , & otherwise ,\end{matrix}\right.$ (1) where f_{c} is the carrier frequency.

Assuming that the transmitted signal is narrowband relative to the propagation channel (which assumption holds in case of beamformed transmissions and bandwidths on the order of 10 MHz and less), the effect of the propagation channel for the signal impinging on the reflector may be modeled by an amplitude gain g_{UL} and phase rotation φ_{UL}. The passband signal impinging on the reflector may thus be modeled as $r \left(t\right) = \left\{\begin{matrix}Re \left\{{g}_{UL}{e}^{i 2 {πf}_{c} t}{e}^{{jφ}_{UL}}\right\} , & {t}_{0} + {τ}_{UL} \leq t \leq {t}_{0} + {T}_{sens} + {τ}_{UL} , \\ 0 , & otherwise ,\end{matrix}\right.$ (2) where τ_{UL} is the UL propagation delay.

The active reflector 24 proceeds to modulate the impinging signal r(t). In some embodiments, the modulation may be performed directly in passband by means of time-varying impedances in the active reflector 24.

If the active reflector 24 modulates the phase of the impinging sensing signal using a signature signal σⱼ(t) from a bank of K possible signature signals σₖ(t), k = 1 ... K the resulting modulated signal in passband may be represented as ${p}^{˜} \left(t\right) = \left\{\begin{matrix}Re \left\{{g}_{UL}{e}^{i 2 {πf}_{c} t}{e}^{{iφ}_{UL}}{e}^{{iσ}_{j} t}\right\} , & {t}_{0} + {τ}_{UL} \leq t \leq {t}_{0} + {T}_{sens} + {τ}_{UL} , \\ 0 , & otherwise .\end{matrix}\right.$ (3)

The active reflector 24 will reflect the modulated signal, whereupon the retransmitted signal may be received in a receive beam by the WD 22. Following the same narrowband assumption as for the UL propagation, the DL channel modifies p̃(t) by a gain g_{DL} and phase rotation φ_{DL}. Additionally, a complex Gaussian noise n(t) is added to the signal. The received signal at the WD 22, in passband, may be modeled as: $s \left(t\right) = \left\{\begin{matrix}Re \left\{{g}_{UL}{g}_{DL}{e}^{i \left(2{πf}_{c}t+{φ}_{UL}+{φ}_{DL}+{σ}_{j}\left(t\right)\right)}+n\left(t\right)\right\} , {t}_{prop} \leq t \leq {t}_{prop} + {T}_{sens} , \\ 0 , otherwise ,\end{matrix}\right.$ (4) where *tₚᵣₒₚ* = t₀ + τ_{UL} + τ_{DL} and τ_{DL} is the DL propagation delay (subsuming propagation delay and possible processing delay at the active reflector 24). After demodulation, the complex baseband signal at the WD 22 may be represented as: $ψ \left(t\right) = \left\{\begin{matrix}{g}_{UL} {g}_{DL} {e}^{i \left({φ}_{UL}+{φ}_{DL}+{σ}_{j}\left(t\right)\right)} + w \left(t\right) , {t}_{prop} \leq t \leq {t}_{prop} + {T}_{sens} , \\ 0 , otherwise ,\end{matrix}\right.$ (5) where w(t) is the complex baseband equivalent of noise signal n(t).

The WD 22 may postprocess ψ(t) in order to a) assess whether the received reflection indeed comes from the direction of the network node 16 and b) to extract information relevant for initial access that may be encoded in ψ(t). The WD 22 possesses the knowledge of the signature bank σₖ(t), k = 1 ... K and one way of performing the postprocessing may be to calculate sliding window correlations of ψ(t) with the signals from the signature bank in continuous time: ${C}_{k} \left(τ\right) = {\int }_{0}^{T} ψ \left(t\right) {e}^{- {iσ}_{k} \left(t-τ\right)} dt , k = 1 , 2 .. K ,$ (6) where T is the total duration of ψ(t). Note that a similar postprocessing may be also done in complex baseband on a time-sampled version of ψ(t).

For a well-designed set of signature signals σₖ(t), correlating with the particular signature that the reflector used to modulate the sensing signal, i.e., σⱼ(t), will result in a distinct correlation peak of the correlation function Cⱼ(τ), whereas correlating with other signatures from the bank will not produce a peak.

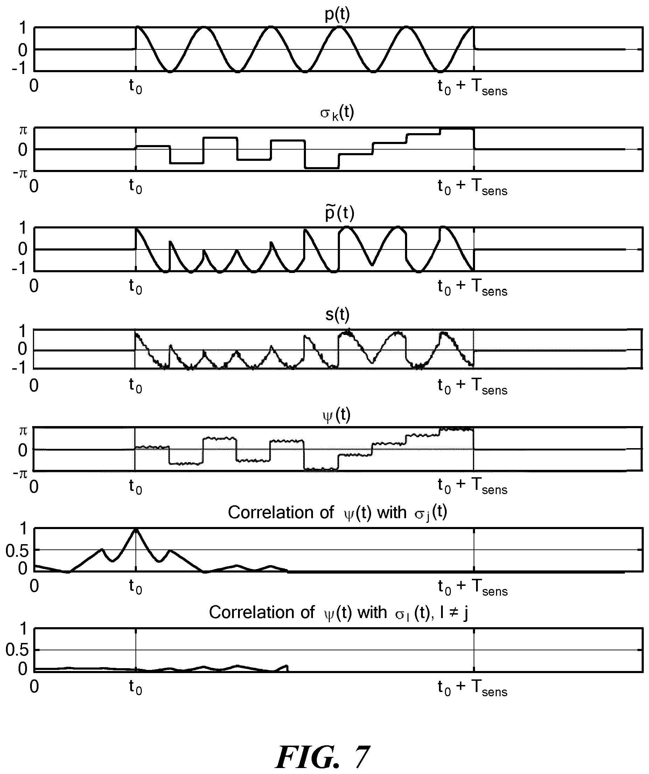

An example illustration of waveforms discussed herein is shown in FIG. 7. For clarity of illustration, g_{UL} = g_{DL} = 1 and φ_{UL} = φ_{DL} = τ_{UL} = τ_{DL} = 0.

When a distinct peak in Cₖ(τ) is observed, the WD 22 may draw two conclusions:
- it may be certain that ψ(t) came from the direction of the network node 16 and not from a random object in the environment (since the likelihood of a random object modulating the reflection by σₖ(t) is very close to 0), and thus may use the corresponding receive beam for subsequent receptions from the network node 16;
- since it is concluded that signature σⱼ(t) was used to modulate the sensing signal, the WD 22 may consult a lookup table to interpret what kind of information the use of signature σⱼ(t) communicates.

A simple illustration of such a lookup table is given in Table 1, where 4 possible signature signals are mapped to 4 possible initial access frequencies. If the WD 22 determines by postprocessing that e.g., σ₃(t) is the signature, i.e., that j = 3, the WD 22 knows that the network transmits the synchronization block at the frequency of 140.15 GHz.

**Table 1: example lookup table for determining initial access frequency**

| k | initial access frequency |
|---|---|
| 1 | 140.05 GHz |
| 2 | 140.1 GHz |
| 3 | 140.15 GHz |
| 4 | 140.2 GHz |

In some embodiments, the signature signal that phase-modulates the reflected signal may be a sequence of L symbols that has a low autocorrelation. One example is a Constant Amplitude Zero Autocorrelation (CAZAC) sequence. One example of a CAZAC sequence that may be employed in some embodiments, is a Zadoff-Chu (ZC) sequence with root *r* and length *L* (or a phase-quantized version thereof), that may be repeated indefinitely, where:
a) length parameter *L* is known to the WD 22 (possibly as part of the communication standard);
b) ZC sequence root parameter *r* possesses a one-to-one mapping to the frequency location of the initial access synchronization block; and/or
c) mapping of frequency locations of synchronization blocks to ZC sequence root *r* is known to the WD 22 (possibly as part of the communication standard).

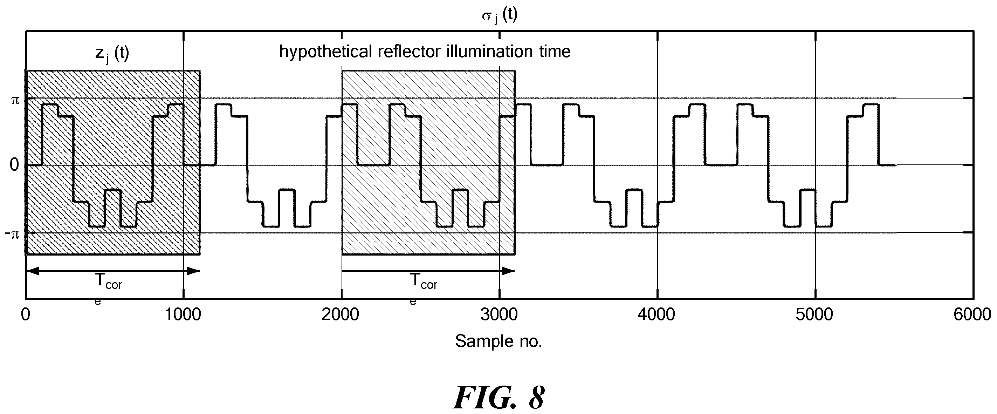

In some embodiments, there are two modes by which the reflector may modulate the impinging signal. In the first mode, the circuitry performing the modulation is activated only when the reflector is illuminated by the impinging signal. This mode may provide better energy efficiency (as the modulating circuitry is turned on only when needed) but requires higher implementation complexity (the sensor that detects the presence of the illuminating signal has to be very sensitive and the responsiveness of the circuitry has to be high). The other mode is a continuously modulating reflector, i.e., a reflector that is always on and performs a modulation operation regardless of whether there is an incoming signal. The benefit of this operating mode is that it does not require a sensor that turns the reflector on or off and thus its implementation has low complexity. The modulating signal in this mode of operation may be an infinite periodic repetition of a core signal *zⱼ*(*t*) of duration *T_{core},* as illustrated in FIG. 8.

As shown in FIG. 8, for the "always on" mode of operation of the reflector, if Tₛₑₙₛ = T_{core}, σⱼ(t) may be a random circular permutation of zⱼ(t), as the reflector may be illuminated at a random time t₀ + τ_{UL}. Let this permutation be denoted as perm(zⱼ(t), t₀).

During postprocessing, the WD 22 may test all random permutations of all core sequences zₖ(t), k = 1... K in order to find a correlation peak. For good performance, signals zₖ(t) need to have good autocorrelation properties (i.e., correlation of a perm(zⱼ(t), t₀) with itself will produce a correlation peak whereas correlation with perm(zⱼ(t), tₗ)), l ≠ 0 will not produce a peak) and also good cross correlation properties with respect to other core signals in the signal bank (i.e., correlation of perm(zⱼ(t), t₀) with itself will produce a correlation peak whereas correlation with perm(zₘ(t), t₀), m ≠ j will not produce a peak).

One signal having good autocorrelation and cross correlation properties as per above is the Zadoff-Chu sequence, defined in discrete-time as: ${ZC}_{r , L} \left[n\right] = {e}^{- j \frac{πrn \left(n+1\right)}{L}} , n = 0 , 1 … L - 1 ,$ (7) where r and L are the root and the length of the ZC sequence, respectively.

In some embodiments, the core signature phase-modulating signal zⱼ(t) is the digital-to-analog converted phase of ZC_{j,L}[n] (i.e., ZC of length L with root set to j): ${z}_{j} \left(t\right) = DAC \left\{-\frac{πrj \left(j+1\right)}{L}\right\} .$ (8)

In some embodiments, the core signature phase-modulating signal zⱼ(t) is the digital-to-analog converted phase of ZC_{j,L}[n], quantized to Q discrete phase levels by the function f_{Q}: ${z}_{j} \left(t\right) = DAC \left\{{f}_{Q}\left(-\frac{πrj \left(j+1\right)}{L}\right)\right\} .$ (9)

If the length parameter L is prime, there are L - 1 distinct ZC sequences of length L, generated by (7) with roots r = 1,2 ... L - 1. For example, if L = 401, there are 400 distinct ZC sequences of length 401. The use of each sequence may encode a set of system parameters to be communicated to the WD 22 prior to initial access. For example, the use of z_{j,L}(t) may indicate that frequency location j (from a predefined frequency raster) is being used for the transmission of the synchronization block.

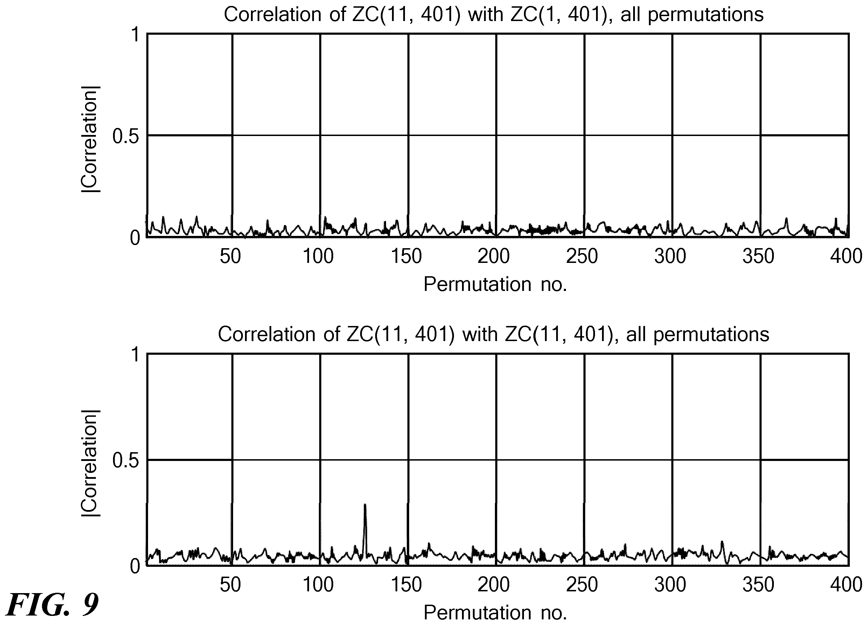

As illustrated in FIG. 9, correlation of two unmatching ZC sequences over all permutations (upper figure) does not produce a distinct correlation peak; correlation of a ZC sequence with itself produces a peak for the correct permutation (lower figure).

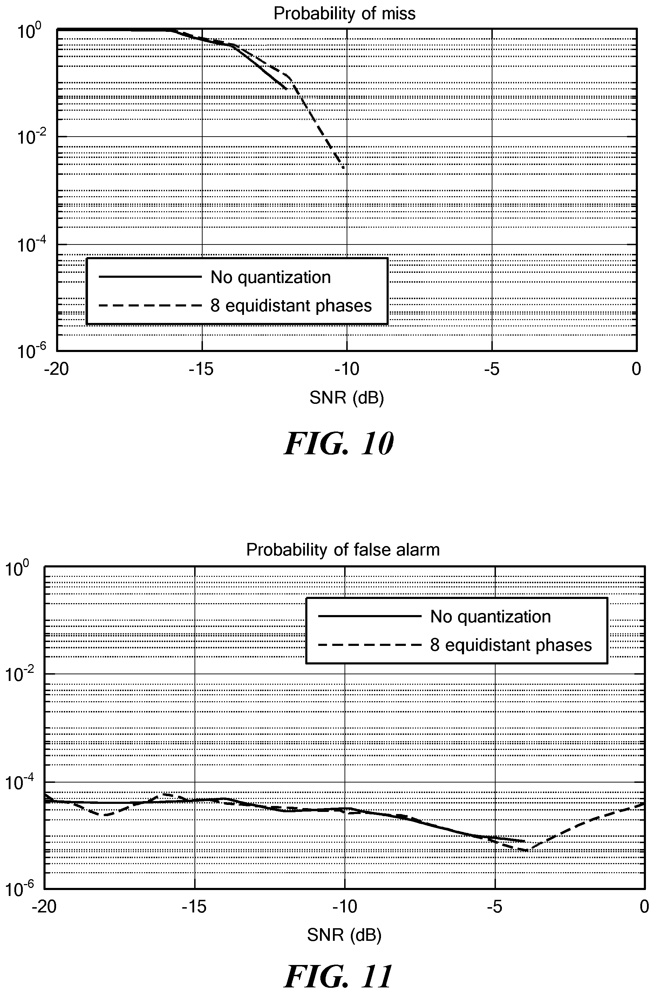

A simple heuristic may be used for detecting the presence of the correct ZC sequence, such as calculating the peak to average power ratio (PAPR) of the correlation function over all sequence permutations and comparing it against a threshold. FIG. 10 shows the probability of a miss (not recognizing the presence of ZC(r, L)). FIG. 11 shows that the probability of a false alarm (determining that ZC(m, L) is present in the signal whereas the correct sequence is ZC(r, L), m ≠ r) for r = 11, for L = 401, for the heuristic detector described above and PAPR threshold of 12 dB. Performance may be analyzed for the original ZC sequence and a phase-quantized version with 8 equidistant phase levels, demonstrating the relative robustness of ZC sequence to phase quantization. Also, it may be concluded that satisfying performance of detection may be obtained for SNRs of -10 dB and higher.

### Example sensing link budget calculation

Extending the previous calculation on sensing time budget, a typical link budget for the described setup may be calculated. Assume 32 transmit and receiver antennas. Additionally, assume carrier frequency f_{c} = 140 GHz, PA power of 0 dBm, antenna element gain (transmit and receive) of 2 dB, radar cross section (RCS) of the reflector of 0.67 m² and NF of 10 dB. The assumed modulation rate is 10 MHz so a double-sided baseband filter also has 10 MHz bandwidth (BW). Finally, the assumed distance between WD 22 and reflector is d = 125 m. The radar link budget is then: $\begin{matrix}SNR = {P}_{PA} + 2 {G}_{ant} + 20 {log}_{10} {N}_{Tx} + 10 {log}_{10} {N}_{Rx} - 20 {log}_{10} \frac{4 π {df}_{c}}{c} - \\ 10 {log}_{10} \left(4{πd}^{2}\right) + 10 {log}_{10} RCS - 10 {log}_{10} kTB + NF = - 8.8 dB ,\end{matrix}$ therefore, the described pre-initial access procedure is feasible at 140 GHz at a WD - network node 16 distance of 125 meters and line-of-sight propagation between the WD and the network node.

Some embodiments include a pre-initial access method at WD side, where the transmit/receive direction to/from the network node 16 is determined by WD 22 sending a sensing signal in the UL (possibly using a transmit beam) and receiving the reflected signal in the DL using a receive beam; and the frequency location of the initial access synchronization block (possibly together with other system parameters relevant for initial access) is encoded in the reflected sensing signal by means of an active reflector 24 that is collocated with the network node 16 and:
- modifies the UL sensing signal from the WD 22; and
- reflects thus modified signal in the DL back towards to WD 22.

In some embodiments, the active reflector 24 modulates the incoming WD 22 sensing signal by changing its phase and/or amplitude using a signature signal known to the WD 22. Also, the mapping of signature signal to frequency location of the synchronization block and other system parameters encoded by the modulation is known to the WD 22 (possibly as part of the standard). The WD 22 performs postprocessing of the received signal using its copy of the signature signal and thus:
a. identifies the reflection as coming from the direction of the network node 16;
b. extracts frequency location of the initial access synchronization block and possibly other initial-access relevant parameters.

In some embodiments, the signature signal is the phase of an infinite periodic repetition of a Zadoff-Chu (ZC) sequence with root *r* and length *L* (or a phase-quantized version thereof), where:
- length parameter *L* is known to the WD (possibly as part of the communication standard);
- ZC sequence root parameter *r* possesses a one-to-one mapping to the frequency location of the initial access synchronization block;
- mapping of frequency locations of synchronization blocks to ZC sequence root *r* is known to the WD (possibly as part of the communication standard).

In some embodiments, WD 22 sensing signal transmission is allocated to a dedicated set of frequency resources (prescribed possibly as part of the communication standard).

As will be appreciated by one of skill in the art, the concepts described herein may be embodied as a method, data processing system, computer program product and/or computer storage media storing an executable computer program. Accordingly, the concepts described herein may take the form of an entirely hardware embodiment, an entirely software embodiment or an embodiment combining software and hardware aspects all generally referred to herein as a "circuit" or "module." Any process, step, action and/or functionality described herein may be performed by, and/or associated to, a corresponding module, which may be implemented in software and/or firmware and/or hardware. Furthermore, the disclosure may take the form of a computer program product on a tangible computer usable storage medium having computer program code embodied in the medium that may be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, may be implemented by computer program instructions. These computer program instructions may be provided to a processor of a general purpose computer (to thereby create a special purpose computer), special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that may direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Python, Java^{®} or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments. Accordingly, all embodiments may be combined in any way and/or combination, and the present specification, including the drawings, shall be construed to constitute a complete written description of all combinations and subcombinations of the embodiments described herein, and of the manner and process of making and using them, and shall support claims to any such combination or subcombination.

It will be appreciated by persons skilled in the art that the embodiments described herein are not limited to what has been particularly shown and described herein above. In addition, unless mention was made above to the contrary, it should be noted that all of the accompanying drawings are not to scale. A variety of modifications and variations are possible in light of the above teachings without departing from the scope of the following claims.

## Claims

1. A method in a wireless device, WD (22), configured to communicate with a network node (16), the network node (16) having an active reflector (24) in proximity thereto, the method comprising:
transmitting (S10) a sensing signal on a transmit beam;
receiving (S12) a received signal on a receive beam;
determining (S14) whether the received signal includes a reflected signal from an active reflector (24) at the network node (16) based at least in part on knowledge of properties of the reflected signal, the reflected signal including information modulated onto the sensing signal; and
when the received signal includes the reflected signal, determining (S16) a frequency location of an initial access synchronization block, SB, based at least in part on information modulated onto the sensing signal by the active reflector (24).

2. The method of Claim 1, wherein determining whether the received signal includes the reflected signal includes detecting a sequence of L symbols in a periodic repetition of the L symbols, the L symbols being selected from a predefined set of symbol sequences known to the WD (22).

3. The method of Claim 2, wherein the sequence of L symbols maps to the frequency location of the initial access SB according to a mapping previously known by the WD (22).

4. The method of any of Claims 1-3, wherein the sensing signal is transmitted on frequency resources reserved for transmission of sensing signals.

5. The method of any of Claims 1-4, wherein determining the frequency location of the initial access SB includes determining a modulation of the reflected signal.

6. A wireless device, WD (22), configured to communicate with a network node (16), the network node (16) having an active reflector (24) in proximity thereto, the WD (22) comprising:
a radio interface (46) configured to:
transmit a sensing signal on a transmit beam; and
receive a received signal on a receive beam; and
processing circuitry (50) in communication with the radio interface (46), the processing circuitry configured to:
determine whether the received signal includes a reflected signal from an active reflector (24) at the network node (16) based at least in part on knowledge of properties of the reflected signal, the reflected signal including information modulated onto the sensing signal; and
when the received signal includes the reflected signal, determine a frequency location of an initial access synchronization block, SB, based at least in part on information modulated onto the sensing signal by the active reflector (24).

7. The WD (22) of Claim 6, wherein determining whether the received signal includes the reflected signal includes detecting a sequence of L symbols in a periodic repetition of the L symbols, the L symbols being selected from a predefined set of symbol sequences known to the WD (22).

8. The WD (22) of Claim 7, wherein the sequence of L symbols maps to the frequency location of the initial access SB according to a mapping previously known by the WD (22).

9. The WD (22) of any of Claims 6-8, wherein the sensing signal is transmitted on frequency resources reserved for transmission of sensing signals.

10. The WD (22) of any of Claims 6-9, wherein determining the frequency location of the initial access SB includes determining a modulation of the reflected signal.

11. An active reflector (24) configured to modulate and reflect an incident signal transmitted from a wireless device, WD (22), the active reflector (24) comprising:
an array of antennas (64) configured to receive the incident signal;
processing circuitry (62) in communication with the antennas (64) and configured to modulate the incident signal with information, the information including an indication of a frequency location of an initial access synchronization block, SB; and
the array of antennas (64) being configured to reflect the modulated incident signal to produce a reflected signal.

12. The active reflector (24) of Claim 11, wherein modulating the incident signal includes encoding a periodic repetition of a sequence of L symbols, the L symbols being selected from a predefined set of symbol sequences known to the WD (22).

13. The active reflector (24) of any of Claims 11-12, wherein modulating the incident signal includes modulating at least one of a phase and amplitude of the incident signal

14. The active reflector (24) of any of Claims 11-13, wherein the processing circuitry (62) is configured to condition the modulating upon whether the incident signal has a power that exceeds a threshold.

15. The active reflector (24) of any of Claims 11-14, wherein modulating the incident signal includes encoding initial access parameters and modulating the incident signal according to the encoded initial access parameters.

16. A method for active-reflector-assisted initial access synchronization by a wireless device, WD (22), the method comprising:
receiving (S18) by an array of antennas of the active reflector (24), an incident signal;
modulating (S20) the incident signal with information, the information including an indication of a frequency location of an initial access synchronization block, SB; and
reflecting (S22) by the array of antennas, the modulated incident signal to produce a reflected signal.

17. The method of Claim 16, further comprising modulating the incident signal by encoding a periodic repetition of a sequence of L symbols, the L symbols being selected from a predefined set of symbol sequences known to the WD (22).

18. The method of any of Claims 16-17, wherein modulating the incident signal includes modulating at least one of a phase and amplitude of the incident signal.

19. The method of any of Claims 16-18, further including conditioning the modulating upon whether the incident signal has a power that exceeds a threshold.

20. The method of any of Claims 16-19, wherein modulating the incident signal includes encoding initial access parameters and modulating the incident signal according to the encoded initial access parameters.

## Patentansprüche

1. Verfahren in einer drahtlosen Vorrichtung, WD (22), die zum Kommunizieren mit einem Netzwerkknoten (16) konfiguriert ist, wobei der Netzwerkknoten (16) in der Nähe desselben einen aktiven Reflektor (24) aufweist, wobei das Verfahren Folgendes umfasst:
Übertragen (S10) eines Erfassungssignals auf einem Übertragungsstrahl;
Empfangen (S12) eines empfangenen Signals auf einem Empfangsstrahl;
Bestimmen (S14), ob das empfangene Signal ein reflektiertes Signal von einem aktiven Reflektor (24) am Netzwerkknoten (16) einschließt, basierend zumindest teilweise auf einer Kenntnis der Eigenschaften des reflektierten Signals, wobei das reflektierte Signal Informationen einschließt, die auf das Erfassungssignal moduliert sind; und
wenn das empfangene Signal das reflektierte Signal einschließt, Bestimmen (S16) einer Frequenzposition eines Anfangszugriffssynchronisationsblocks, -SB, basierend zumindest teilweise auf Informationen, die durch den aktiven Reflektor (24) auf das Erfassungssignal moduliert sind.

2. Verfahren nach Anspruch 1, wobei das Bestimmen, ob das empfangene Signal das reflektierte Signal einschließt, das Erkennen einer Folge von L Symbolen in einer periodischen Wiederholung der L Symbole einschließt, wobei die L Symbole aus einem der WD (22) bekannten vordefinierten Satz von Symbolfolgen ausgewählt werden.

3. Verfahren nach Anspruch 2, wobei die Folge von L Symbolen gemäß einer der WD (22) zuvor bekannten Abbildung auf die Frequenzposition des Anfangszugriffs-SB abgebildet wird.

4. Verfahren nach einem der Ansprüche 1-3, wobei das Erfassungssignal auf Frequenzressourcen übertragen wird, die für eine Übertragung von Erfassungssignalen reserviert sind.

5. Verfahren nach einem der Ansprüche 1-4, wobei das Bestimmen der Frequenzposition des Anfangszugriffs-SB das Bestimmen einer Modulation des reflektierten Signals einschließt.

6. Drahtlose Vorrichtung, WD (22), die zum Kommunizieren mit einem Netzwerkknoten (16) konfiguriert ist, wobei der Netzwerkknoten (16) in der Nähe desselben einen aktiven Reflektor (24) aufweist, wobei die WD (22) Folgendes umfasst:
eine Funkschnittstelle (46), die zu Folgendem konfiguriert ist:
ein Erfassungssignal auf einem Übertragungsstrahl zu übertragen und
ein empfangenes Signal auf einem Empfangsstrahl zu empfangen; und
Verarbeitungsschaltungstechnik (50) in Kommunikation mit der Funkschnittstelle (46), wobei die Verarbeitungsschaltungstechnik zu Folgendem konfiguriert ist:
festzustellen, ob das empfangene Signal ein reflektiertes Signal von einem aktiven Reflektor (24) am Netzwerkknoten (16) einschließt, basierend zumindest teilweise auf einer Kenntnis der Eigenschaften des reflektierten Signals, wobei das reflektierte Signal Informationen einschließt, die auf das Erfassungssignal moduliert sind; und
wenn das empfangene Signal das reflektierte Signal einschließt, eine Frequenzposition eines Anfangszugriffssynchronisationsblocks, -SB, zu bestimmen, basierend zumindest teilweise auf Informationen, die durch den aktiven Reflektor (24) auf das Erfassungssignal moduliert sind.

7. WD (22) nach Anspruch 6, wobei das Bestimmen, ob das empfangene Signal das reflektierte Signal einschließt, das Erkennen einer Folge von L Symbolen in einer periodischen Wiederholung der L Symbole einschließt, wobei die L Symbole aus einem der WD (22) bekannten vordefinierten Satz von Symbolfolgen ausgewählt werden.

8. WD (22) nach Anspruch 7, wobei die Folge von L Symbolen gemäß einer der WD (22) zuvor bekannten Abbildung auf den Frequenzort des Anfangszugriffs-SB abgebildet wird.

9. WD (22) nach einem der Ansprüche 6-8, wobei das Erfassungssignal auf Frequenzressourcen übertragen wird, die für eine Übertragung von Erfassungssignalen reserviert sind.

10. WD (22) eines der Ansprüche 6-9, wobei das Bestimmen der Frequenzposition des Anfangszugriffs-SB das Bestimmen einer Modulation des reflektierten Signals einschließt.

11. Aktiver Reflektor (24), der dafür konfiguriert ist, ein von einer drahtlosen Vorrichtung, WD (22) übertragenes einfallendes Signal zu modulieren und zu reflektieren, wobei der aktive Reflektor (24) Folgendes umfasst:
eine Anordnung von Antennen (64), die dafür konfiguriert sind, das einfallende Signal zu empfangen;
Verarbeitungsschaltungstechnik (62), in Kommunikation mit den Antennen (64) und dafür konfiguriert, das einfallende Signal mit Informationen zu modulieren, wobei die Informationen eine Angabe einer Frequenzposition eines Anfangszugriffssynchronisationsblocks, -SB, einschließen; und
die Antennenanordnung (64) dafür konfiguriert ist, das modulierte einfallende Signal zu reflektieren, um ein reflektiertes Signal zu erzeugen.

12. Aktiver Reflektor (24) nach Anspruch 11, wobei das Modulieren des einfallenden Signals das Codieren einer periodischen Wiederholung einer Folge von L Symbolen einschließt, wobei die L Symbole aus einem der WD (22) bekannten vordefinierten Satz von Symbolfolgen ausgewählt werden.

13. Aktiver Reflektor (24) nach einem der Ansprüche 11-12, wobei das Modulieren des einfallenden Signals das Modulieren mindestens eines von einer Phase und einer Amplitude des einfallenden Signals einschließt.

14. Aktiver Reflektor (24) nach einem der Ansprüche 11-13, wobei die Verarbeitungsschaltungstechnik (62) dafür konfiguriert ist, das Modulieren davon abhängig zu machen, ob das einfallende Signal eine Leistung aufweist, die einen Schwellenwert überschreitet.

15. Aktiver Reflektor (24) nach einem der Ansprüche 11-14, wobei das Modulieren des einfallenden Signals das Codieren von Anfangszugriffsparametern und das Modulieren des einfallenden Signals gemäß den codierten Anfangszugriffsparametern einschließt.

16. Verfahren zur aktiven reflektorunterstützten Erstzugriffssynchronisierung durch eine drahtlose Vorrichtung, WD (22), wobei das Verfahren Folgendes umfasst:
Empfangen (S18) eines einfallenden Signals, durch eine Anordnung von Antennen des aktiven Reflektors (24);
Modulieren (S20) des einfallenden Signals mit Informationen, wobei die Informationen eine Angabe einer Frequenzposition eines Anfangszugriffssynchronisationsblocks, -SB, einschließen; und
Reflektieren (S22) des modulierten einfallenden Signals, durch die Anordnung von Antennen, um ein reflektiertes Signal zu erzeugen.

17. Verfahren nach Anspruch 16, weiter umfassend das Modulieren des einfallenden Signals durch Codieren einer periodischen Wiederholung einer Folge von L Symbolen, wobei die L Symbole aus einem der WD (22) bekannten vordefinierten Satz von Symbolfolgen ausgewählt werden.

18. Verfahren nach einem der Ansprüche 16-17, wobei das Modulieren des einfallenden Signals das Modulieren mindestens eines von einer Phase und einer Amplitude des einfallenden Signals einschließt.

19. Verfahren nach einem der Ansprüche 16-18, ferner einschließend das Abhängigmachen des Modulierens davon, ob das einfallende Signal eine Leistung aufweist, die einen Schwellenwert überschreitet.

20. Verfahren nach einem der Ansprüche 16-19, wobei das Modulieren des einfallenden Signals das Codieren von Anfangszugriffsparametern und das Modulieren des einfallenden Signals gemäß den codierten Anfangszugriffsparametern einschließt.

## Revendications

1. Procédé dans un dispositif sans fil, WD (22), configuré pour communiquer avec un nœud de réseau (16), le nœud de réseau (16) présentant un réflecteur actif (24) à proximité de celui-ci, le procédé comprenant les étapes consistant à :
transmettre (S10) un signal de détection sur un faisceau de transmission ;
recevoir (S12) un signal reçu sur un faisceau de réception ;
déterminer (S14) si le signal reçu inclut un signal réfléchi par un réflecteur actif (24) au niveau du nœud de réseau (16), sur la base au moins en partie de la connaissance des propriétés du signal réfléchi, le signal réfléchi incluant des informations modulées sur le signal de détection ; et
lorsque le signal reçu inclut le signal réfléchi, déterminer (S16) un emplacement de fréquence d'un bloc de synchronisation, SB, d'accès initial sur la base au moins en partie d'informations modulées sur le signal de détection par le réflecteur actif (24).

2. Procédé selon la revendication 1, dans lequel l'étape consistant à déterminer si le signal reçu inclut le signal réfléchi inclut une détection d'une séquence de L symboles dans une répétition périodique des L symboles, les L symboles étant sélectionnés à partir d'un ensemble prédéfini de séquences de symboles connues du WD (22).

3. Procédé selon la revendication 2, dans lequel la séquence de L symboles mappe l'emplacement de fréquence du SB d'accès initial selon un mappage précédemment connu du WD (22).

4. Procédé selon l'une quelconque des revendications 1-3, dans lequel le signal de détection est transmis sur des ressources de fréquence réservées à la transmission de signaux de détection.

5. Procédé selon l'une quelconque des revendications 1-4, dans lequel la détermination de l'emplacement de fréquence du SB d'accès initial inclut la détermination d'une modulation du signal réfléchi.

6. Dispositif sans fil, WD (22), configuré pour communiquer avec un nœud de réseau (16), le nœud de réseau (16) présentant un réflecteur actif (24) à proximité de celui-ci, le WD (22) comprenant :
une interface radio (46) configurée pour :
transmettre un signal de détection sur un faisceau de transmission ; et
recevoir un signal reçu sur un faisceau de réception ; et
un circuit de traitement (50) en communication avec l'interface radio (46), le circuit de traitement étant configuré pour :
déterminer si le signal reçu inclut un signal réfléchi par un réflecteur actif (24) au niveau du nœud de réseau (16), sur la base au moins en partie de la connaissance des propriétés du signal réfléchi, le signal réfléchi incluant des informations modulées sur le signal de détection ; et
lorsque le signal reçu inclut le signal réfléchi, déterminer un emplacement de fréquence d'un bloc de synchronisation, SB, d'accès initial sur la base au moins en partie d'informations modulées sur le signal de détection par le réflecteur actif (24).

7. WD (22) selon la revendication 6 dans lequel l'étape consistant à déterminer si le signal reçu inclut le signal réfléchi inclut une détection d'une séquence de L symboles dans une répétition périodique des L symboles, les L symboles étant sélectionnés à partir d'un ensemble prédéfini de séquences de symboles connues du WD (22).

8. WD (22) selon la revendication 7, dans lequel la séquence de L symboles mappe l'emplacement de fréquence du SB d'accès initial selon un mappage précédemment connu du WD (22).

9. WD (22) selon l'une quelconque des revendications 6-8, dans lequel le signal de détection est transmis sur des ressources de fréquence réservées à la transmission de signaux de détection.

10. WD (22) selon l'une quelconque des revendications 6-9, dans lequel la détermination de l'emplacement de fréquence du SB d'accès initial inclut la détermination d'une modulation du signal réfléchi.

11. Réflecteur actif (24) configuré pour moduler et réfléchir un signal incident transmis par un dispositif sans fil, WD (22), le réflecteur actif (24) comprenant :
un réseau d'antennes (64) configuré pour recevoir le signal incident ;
un circuit de traitement (62) en communication avec les antennes (64) et configuré pour moduler le signal incident avec des informations, les informations incluant une indication d'un emplacement de fréquence d'un bloc de synchronisation, SB, d'accès initial ; et
le réseau d'antennes (64) étant configuré pour réfléchir le signal incident modulé afin de produire un signal réfléchi.

12. Réflecteur actif (24) selon la revendication 11, dans lequel la modulation du signal incident inclut l'encodage d'une répétition périodique d'une séquence de L symboles, les L symboles étant sélectionnés à partir d'un ensemble prédéfini de séquences de symboles connues du WD (22).

13. Réflecteur actif (24) selon l'une quelconque des revendications 11-12, dans lequel la modulation du signal incident inclut la modulation d'au moins une d'une phase ou d'une amplitude du signal incident.

14. Réflecteur actif (24) selon l'une quelconque des revendications 11-13, dans lequel le circuit de traitement (62) est configuré pour conditionner la modulation au fait que le signal incident présente une puissance qui dépasse un seuil.

15. Réflecteur actif (24) selon l'une quelconque des revendications 11-14, dans lequel la modulation du signal incident inclut l'encodage de paramètres d'accès initial et la modulation du signal incident selon les paramètres d'accès initial encodés.

16. Procédé de synchronisation d'accès initial assistée par réflecteur actif par un dispositif sans fil, WD (22), le procédé comprenant les étapes consistant à :
recevoir (S18) un signal incident par un réseau d'antennes du réflecteur actif (24) ;
moduler (S20) le signal incident avec des informations, les informations incluant une indication d'un emplacement de fréquence d'un bloc de synchronisation, SB, d'accès initial ; et
réfléchir (S22) par le réseau d'antennes le signal incident modulé pour produire un signal réfléchi.

17. Procédé selon la revendication 16, comprenant en outre la modulation du signal incident par l'encodage d'une répétition périodique d'une séquence de L symboles, les L symboles étant sélectionnés à partir d'un ensemble prédéfini de séquences de symboles connues du WD (22).

18. Procédé selon l'une quelconque des revendications 16-17, dans lequel la modulation du signal incident inclut la modulation d'au moins une d'une phase ou d'une amplitude du signal incident.

19. Procédé selon l'une quelconque des revendications 16-18, incluant en outre le conditionnement de la modulation au fait que le signal incident présente une puissance qui dépasse un seuil.

20. Procédé selon l'une quelconque des revendications 16-19, dans lequel la modulation du signal incident inclut l'encodage de paramètres d'accès initial et la modulation du signal incident selon les paramètres d'accès initial encodés.
